# EUROPEAN PATENT APPLICATION

(11) **EP 4 361 182 A1**
(43) Date of publication of application: **01.05.2024**
(21) Application number: 22306618.4
(22) Date of filing: 25.10.2022
(51) Int. Cl.: C08F 4/34, C08F 18/24, C08F 118/16, C08F 218/00, G02C 7/02

(54) **MANUFACTURING ALLYLIC LENSES WITH IMPROVED COLOR USING BENZOYL PEROXIDE AS THE INITIATOR**

(71) Applicant: Essilor International, 94220 Charenton-Le-Pont (FR)
(72) Inventor: MASURE, Laurie, 10120 BANGKOK (TH); FROMENTIN, Pierre, 10240 BANGKOK (TH)
(74) Representative: Plasseraud IP

(57) **Abstract**

The present disclosure relates to a method for manufacturing a lens comprising the following steps:
a. Providing a mass m_{allyl} of at least one allyl monomer or allyl oligomer,
b. Providing a radical initiator composition comprising benzoyl peroxide (BPO) in mixture with water,
c. Mixing said at least one allyl monomer or allyl oligomer with the radical initiator composition to obtain a polymerizable composition,
d. Stripping the water from the polymerizable composition to obtain a dried polymerizable composition,
e. Providing a mold assembly and filling the mold assembly with the dried polymerizable composition,
f. Curing the dried polymerizable composition in the mold assembly to obtain the lens.

The invention also provides a polymerizable composition for the manufacture of a lens that is characterised by reduce yellowing.

## Description

### Field

The present disclosure relates to a method for manufacturing a lens, comprising the polymerization of at least one allyl monomer or allyl oligomer using benzoyl peroxide as the radical initiator. This method results in lenses having an improved color.

### Background

It is very common to manufacture a lens, such as an ophthalmic lens, by the radical polymerization of allyl monomers and/or oligomers, such as CR39.

CR39 is a blend of allyl monomers and oligomers derived from diethylene glycol bis(allyl carbonate).

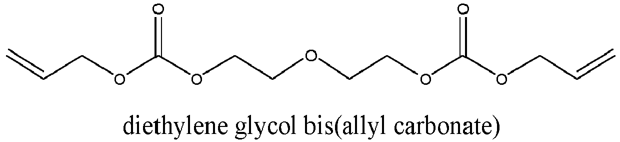

The standard radical initiator used in the polymerization of allyl monomers and oligomers, such as CR39, is diisopropyl peroxydicarbonate (IPP). However, the manufacture of IPP and its handling poses some safety issues. Isopropyl chloroformate (IPCF), used in the synthesis of IPP, is a highly flammable material and IPP itself lacks stability at ambient temperature (IPP has a half-life of one hour at 56°C). Handling of IPP, e.g. during the preparation of lenses based on CR39, therefore requires the use of cooling systems.

Benzoyl peroxide (BPO) is viewed as a possible substitute for IPP, which avoids these issues. Its synthesis does not require the use of IPCF and it is more stable than IPP with a half-life of one hour at 92°C.

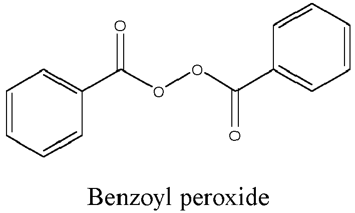

In dry form, BPO is a very dangerous material. It explodes spontaneously when heated above its melting point (103°C), which can happen due to simple friction or due to a shock. However, when mixed with a large surplus of water, BPO is safe to handle even at room temperature. Commercially, BPO is typically sold in the form of a paste or in the form of granules, said paste or granules comprising about 75% BPO and about 25% water by mass.

An issue with the use of BPO as a radical initiator in the production of lenses from allyl monomers and oligomers, such as CR39, is that the obtained lenses have a relatively high yellowness index (YI), which makes these lenses unacceptable for most consumers.

The present disclosure provides a method for manufacturing a lens, comprising the polymerization of at least one allyl monomer or allyl oligomer using benzoyl peroxide as the radical initiator that surprisingly results in lenses having an improved color.

### Summary

It is herein disclosed the following items.
A. A method for manufacturing a lens comprising the following steps:
   a. Providing a mass m_{allyl} of at least one allyl monomer or allyl oligomer,
   b. Providing a radical initiator composition comprising benzoyl peroxide (BPO) in mixture with water,
   c. Mixing said at least one allyl monomer or allyl oligomer with the radical initiator composition to obtain a polymerizable composition,
   d. Stripping the water from the polymerizable composition to obtain a dried polymerizable composition,
   e. Providing a mold assembly and filling the mold assembly with the dried polymerizable composition,
   f. Curing the dried polymerizable composition in the mold assembly to obtain the lens.
B. The method according to item A, wherein the lens is an ophthalmic lens.
C. The method according to item A or item B, wherein the at least one allyl monomer or allyl oligomer is provided as part of an allyl composition comprising more than 95%, in particular more than 97%, more particularly more than 99% of the at least one allyl monomer or allyl oligomer by mass relative to the total mass of the allyl composition.
D. The method according to any one of items A-C, wherein the at least one allyl monomer or allyl oligomer is provided as part of an allyl composition comprising 0.003 to 0.04% of water by mass relative to the total mass of the allyl composition.
E. The method according to any one of items A-D, wherein the at least one allyl monomer or allyl oligomer is a compound or a mixture of compounds, wherein all the compounds comprise at least two allyl groups each.
F. The method according to any one of items A-E, wherein the at least one allyl monomer or allyl oligomer comprises at least 90%, more particularly 95% to 99% by mass relative to m_{allyl} of a compound selected in the group consisting of diethylene glycol bis(allyl carbonate), oligomers of diethylene glycol bis(allyl carbonate), ethylene glycol bis(allyl carbonate), oligomers of ethylene glycol bis(allyl carbonate), bisphenol A bis(allyl carbonate), oligomers of bisphenol A bis(allyl carbonate), diallyl phthalate, diallyl isophthalate, diallyl terephthalate, and mixtures thereof.
G. The method according to any one of items A-F, wherein the at least one allyl monomer or allyl oligomer comprises 1% to 10%, in particular 1% to 5% by mass relative to m_{allyl} of a monomer represented by formula (I): 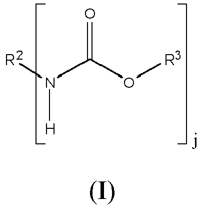 wherein R² is a polyvalent linking group that is free of urethane linkages; R³ is a residue of a material having a single hydroxy group and at least one allyl group, R being free of urethane linkages, and j is a number from 2 to 4.
H. The method according to item G, wherein R² is a residue of a cycloaliphatic diisocyanate selected from isophorone diisocyanate, cyclohexane diisocyanate, methylcyclohexane diisocyanate, bis(isocyanatomethyl)cyclohexane, bis(isocyanatocyclohexyl)methane, bis(isocyanatocyclohexyl)-2,2-propane, bis(isocyanatocyclohexyl)-1,2-ethane, and mixtures thereof, and j is 2.
I. The method according to item G or item H, wherein R³ is a residue selected from C₂-C₄ alkylene glycol allyl ether, poly(C₂-C₄ alkylene glycol) allyl ether (such as a residue selected from poly(ethylene glycol) allyl ether, poly(1,2-propylene glycol) allyl ether and mixtures thereof), trimethylol propane di(allyl ether), trimethylol ethane di(allyl ether), pentaerythritol tri(allyl ether), di-trimethylol propane tri(allyl ether) and mixtures thereof.
J. The method according to any one of items G-I, wherein the at least one allyl monomer or allyl oligomer comprises 95% to 99% by mass relative to m_{allyl} of a mixture of diethylene glycol bis(allyl carbonate) and oligomers of diethylene glycol bis(allyl carbonate) and 1% to 5% by mass relative to m_{allyl} of a monomer of formula (I).
K. The method according to J, wherein the diethylene glycol bis(allyl carbonate) represents 90% to 99% of the total mass of the mixture of diethylene glycol bis(allyl carbonate) and oligomers of diethylene glycol bis(allyl carbonate).
L. The method according to any one of items A-K, wherein BPO and water represent 95% to 100%, in particular 99% to 100% of the mass of the RIC.
M. The method according to item L, wherein water represents 5% to 40% of the mass of the radical initiator composition (RIC), in particular 20% to 30%.
N. The method according to any one of items A-M, wherein the ratio m_{water1}/m_{BPO} of the mass of the water in the RIC over the dry mass of the BPO in the radical initiator composition is of at least 0.28, in particular of 0.29 to 0.45, more particularly of 0.295 to 0.40, even more particularly of 0.30 to 0.39.
O. The method according to any one of items A-N, wherein steps a. to e. are performed at room temperature.
P. The method according to any one of items A-O, wherein the ratio m_{BPO}/m_{allyl} of the dry mass of the BPO over the dry mass of the at least one allyl monomer or allyl oligomer, is of at least 0.01, in particular of 0.014 to 0.046, more particularly of 0.021 to 0.025, even more particularly of 0.022 to 0.024.
Q. The method according to any one of items A-P, wherein m_{allyl} represents at least 95%, in particular 95% to 99%, more particularly 95% to 98%, even more particularly of 95% to 97% of the total mass of the polymerizable composition.
R. The method according to any one of items A-Q, wherein the mass of additives different than BPO, water and the at least one allyl monomer or oligomer, m_{additives}, represent less than 1%, in particular less than 0.5%, of the total mass of the polymerizable composition.
S. The method according to any one of items A-R, wherein the polymerizable composition comprises at least one light-absorbing additive such as a dye, a pigment, an UV absorber, or an IR absorber.
T. The method according to item S, wherein the at least one light absorbing additive is mixed with the at least one allyl monomer or allyl oligomer and the radical initiator composition during step c.
U. The method according to item S or item T, wherein the at least one light absorbing additives comprises an UV absorber soluble in the polymerizable composition, alone or in mixture with one or more color balancing dyes.
V. The method according to item U, wherein the UV absorber has the following structure (II): 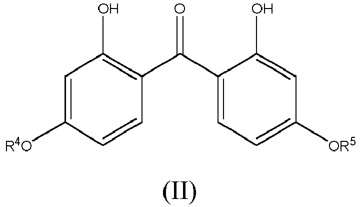 wherein R⁴ and R⁵ are each independently chosen from H or an alkyl chain having 1 to 12 carbon atoms, in particular wherein R⁴ and R⁵ are methyl groups.
W. The method according to any one of items S-V, wherein the at least one light absorbing additive represents from 0.02% to 0.5%, in particular from 0.05% to 0.2% of the total mass of the polymerizable composition.
X. The method according to any one of items A-W, wherein in step d., water is stripped from the polymerizable composition until the mass of water in the dried polymerizable composition m_{water2} is below 0.65%, such as 0.05% to 0.65%, in particular below 0.63%, such as 0.05% to 0.63%, more particularly below 0.6%, such as 0.05% to 0.60%, even more particularly below 0.59%, such as 0.05% to 0.59%, of the total mass of the dried polymerizable composition.
Y. The method according to any one of items A-X, wherein curing the dried polymerizable composition comprises 15 to 25 hours of heating the dried polymerizable composition between 60°C and 125°C, said heating comprising maintaining the dried polymerizable composition at a temperature of at least 110°C for 2 to 10 hours.
Z. The method according to any one of items A-Y, further comprising after step f. a step of annealing the lens comprising or consisting of 45 min to 1h30 of heating at a temperature of 85°C to 115°C.
AA. The method according to any one of items A-Z, further comprising after step f., or where applicable after annealing, a step of surfacing of the lens, in particular surfacing of a back face of the lens.
BB. The method according to item AA, further comprising after surfacing, a step of applying a varnish improving the cosmetics and/or the scratch resistance of the lens.
CC. The method according to item BB, further comprising after applying the varnish, a step of applying an anti-reflective coating.
DD. The method according to any one of items A to CC, further comprising after step f., a step of edging the lens, preferably the step of edging the lens is performed directly after annealing the lens or together with the surfacing.
EE. The method according to any one of items X to DD, wherein
   in step d., water is stripped from the polymerizable composition until the mass of water in the dried polymerizable composition m_{water2} is below 0.6%, such as 0.05% to 0.60%, in particular below 0.59%, such as 0.05% to 0.59%, of the total mass of the dried polymerizable composition,
   the ratio m_{BPO}/m_{allyl} of the dry mass of the BPO over the dry mass of the at least one allyl monomer or allyl oligomer, is of 0.021 to 0.025, in particular of 0.022 to 0.024,
   m_{allyl} represents at least 95% of the total mass of the polymerizable composition,
   the ratio m_{water1}/m_{BPO} of the mass of the water in the RIC over the dry mass of the BPO in the radical initiator composition is of at least 0.28, in particular of 0.29 to 0.45.
FF. A polymerizable composition for manufacturing a lens comprising at least one allyl monomer or oligomer, BPO, and 0.05% to 0.65%, in particular 0.05% to 0.63%, more particularly 0.05% to 0.60%, even more particularly 0.05% to 0.59% of water, by mass relative to the total mass of the composition.
GG. The composition according to item FF, wherein the composition is a composition for manufacturing an ophthalmic lens.
HH. The composition according to item FF or item GG, wherein the at least one allyl monomer or allyl oligomer is as defined in any one of items E to L.
II. The composition according to any one of items FF to HH, wherein the ratio m_{BPO}/m_{allyl} of the dry mass of the BPO in the composition over the dry mass of the at least one allyl monomer or allyl oligomer in the composition, is of at least 0.01, in particular of 0.014 to 0.046, more particularly of 0.021 to 0.025, even more particularly of 0.022 to 0.024.
JJ. The composition according to any one of items FF to II, wherein m_{allyl} represents at least 95%, in particular 95% to 99%, more particularly 95% to 98%, even more particularly of 95% to 97% of the total mass of the composition.
KK. The composition according to any one of items FF-JJ, wherein the composition comprises at least one light-absorbing additive such as a dye, a pigment, an UV absorber, or an IR absorber.
LL. The composition according to item KK, wherein the at least one light absorbing additives comprises an UV absorber soluble in the composition, alone or in mixture with one or more color balancing dyes.
MM. The composition according to item LL, wherein the UV absorber has the following structure (II): 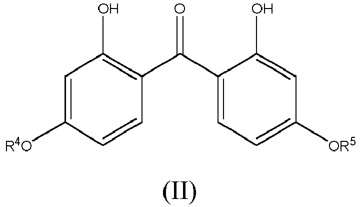 wherein R⁴ and R⁵ are each independently chosen from H or an alkyl chain having 1 to 12 carbon atoms, in particular wherein R⁴ and R⁵ are methyl groups.
NN. The composition according to any one of items KK to MM, wherein the mass of the at least one light absorbing additive represents from 0.02% to 0.5%, in particular from 0.05% to 0.2% of the total mass of the composition.
OO. Use of less than 0.65%, such as 0.05% to 0.65%, in particular less than 0.63%, such as 0.05% to 0.63%, more particularly less than 0.60%, such as 0.05% to 0.60%, even more particularly less than 0.59%, such as 0.05% to 0.59%, of water in a polymerizable composition comprising BPO and at least one allyl monomer or allyl oligomer for reducing the yellowness index of the cured polymerizable composition, wherein the percentage is a mass percentage relative to the total mass of the polymerizable composition.
PP. The use according to item OO, wherein the use is a use in the manufacturing of a lens, in particular an ophthalmic lens.
QQ. The use according to item PP or item OO, wherein the at least one allyl monomer or allyl oligomer is as defined in any one of items E to L.
RR. The use according to any one of items OO-QQ, wherein the ratio m_{BPO}/m_{allyl} of the dry mass of the BPO in the polymerizable composition over the dry mass of the at least one allyl monomer or allyl oligomer in the polymerizable composition, is of at least 0.01, in particular of 0.014 to 0.046, more particularly of 0.021 to 0.025, even more particularly of 0.022 to 0.024.
SS. The use according to any one of items OO-RR, wherein the polymerizable composition comprises at least one light-absorbing additive such as a dye, a pigment, an UV absorber, or an IR absorber.
TT. The use according to item SS, wherein the at least one light absorbing additives comprises an UV absorber soluble in the polymerizable composition, alone or in mixture with one or more color balancing dyes.
UU. The use according to item TT, wherein the UV absorber has the following structure (II): 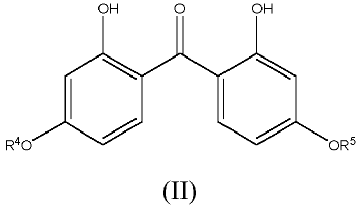 wherein R⁴ and R⁵ are each independently chosen from H or an alkyl chain having 1 to 12 carbon atoms, in particular wherein R⁴ and R⁵ are methyl groups.
VV. The use according to any one of items SS to UU, wherein the at least one light absorbing additive represents from 0.02% to 0.5%, in particular from 0.05% to 0.2% of the total mass of the polymerizable composition.
WW. The use according to any one of items OO to VV, wherein the polymerizable composition is cured as in item T.

### Detailed description

The presently disclosed method for manufacturing a lens comprises the following steps:
a. Providing a mass m_{allyl} of at least one allyl monomer or allyl oligomer,
b. Providing a radical initiator composition comprising benzoyl peroxide (BPO) in mixture with water,
c. Mixing said at least one allyl monomer or allyl oligomer with the radical initiator composition to obtain a polymerizable composition,
d. Stripping the water from the polymerizable composition to obtain a dried polymerizable composition,
e. Providing a mold assembly and filling the mold assembly with the dried polymerizable composition,
f. Curing the dried polymerizable composition in the mold assembly to obtain the lens.

In the herein disclosed method, the lens may be an ophthalmic lens.

As herein defined, an ophthalmic lens is a lens which is designed to be used in monocles or in eyeglasses (including sunglasses, goggles and safety glasses). As defined herein, contact lenses are not ophthalmic lenses. Ophthalmic lenses are typically used to protect the eye and/or correct the sight. Ophthalmic lenses can be uncorrective ophthalmic lenses (also called plano or afocal lenses) or corrective ophthalmic lenses. A corrective lens may be a unifocal, a bifocal, a trifocal or a progressive lens. As defined herein, ophthalmic lenses can be finished lenses of semi-finished lenses. A semi-finished lens undergoes various treatment steps such as surfacing, coloring, coating and edging before being finally included in eyeglasses or in a monocle. A finished lens is ready to be included in eyeglasses or in a monocle.

It should be understood that the one allyl monomer or allyl oligomer (also called hereinafter the allyl component) can be a single allyl monomer, a single allyl oligomer, a mixture of two or more allyl monomers, a mixture of two or more allyl oligomers or a mixture of one or more allyl monomer with one or more allyl oligomer.

The allyl component may be provided as part of an allyl composition comprising more than 95%, in particular more than 97%, more particularly more than 99% allyl monomers or allyl oligomers by mass relative to the total mass of the allyl composition.

The allyl composition may comprise residual moisture, for example 0.003 to 0.04% of water by mass relative to the total mass of the allyl composition.

In the case where the allyl component is provided as part of an allyl composition, it should be understood that m_{allyl} is the mass of the allyl component present in the allyl composition, thus excluding, for example, water and impurities, which are not allyl monomers or oligomers, present in the allyl composition.

As defined herein, the at least one allyl monomer or allyl oligomer is a compound or a mixture of compounds, wherein all the compounds comprise at least two allyl groups each.

In particular, in the herein disclosed method, the at least one allyl monomer or allyl oligomer may comprise at least 90%, more particularly 95% to 99% by mass relative to m_{allyl} of a compound selected in the group consisting of diethylene glycol bis(allyl carbonate), oligomers of diethylene glycol bis(allyl carbonate), ethylene glycol bis(allyl carbonate), oligomers of ethylene glycol bis(allyl carbonate), bisphenol A bis(allyl carbonate), oligomers of bisphenol A bis(allyl carbonate), diallyl phthalate, diallyl isophthalate, diallyl terephthalate, and mixtures thereof.

It should be understood that, in the oligomers of diethylene glycol bis(allyl carbonate), of ethylene glycol bis(allyl carbonate), or of bisphenol A bis(allyl carbonate), the repeated unit is the diethylene glycol carbonate unit, the ethylene glycol carbonate unit or the bisphenol A carbonate unit respectively.

In the herein disclosed method, the at least one allyl monomer or allyl oligomer may comprise 1% to 10%, in particular 1% to 5% by mass relative to m_{allyl} of a monomer represented by formula (I): 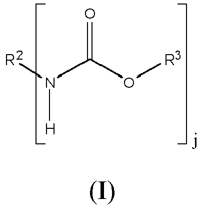 wherein R² is a polyvalent linking group that is free of urethane linkages; R³ is a residue of a material having a single hydroxy group and at least one allyl group, R being free of urethane linkages, and j is a number from 2 to 4.

Monomers of formula (I) are described in US 2003/0173551 A1.

For example, R² may be a residue of a cycloaliphatic diisocyanate selected from isophorone diisocyanate, cyclohexane diisocyanate, methylcyclohexane diisocyanate, bis(isocyanatomethyl)cyclohexane, bis(isocyanatocyclohexyl)methane, bis(isocyanatocyclohexyl)-2,2-propane, bis(isocyanatocyclohexyl)-1,2-ethane, and mixtures thereof, and j is 2.

For example R³ may be a residue selected from C₂-C₄ alkylene glycol allyl ether, poly(C₂-C₄ alkylene glycol) allyl ether (such as a residue selected from poly(ethylene glycol) allyl ether, poly(1,2-propylene glycol) allyl ether and mixtures thereof), trimethylol propane di(allyl ether), trimethylol ethane di(allyl ether), pentaerythritol tri(allyl ether), di-trimethylol propane tri(allyl ether) and mixtures thereof.

Monomers of formula (I) may be comprised in the allyl component in order to prevent the formation of so-called "fern" defects, which are observable on tinted lenses.

One example of a monomer according to formula (I) is CR39-E provided by PPG.

In the herein disclosed method, the at least one allyl monomer or allyl oligomer may comprise 95% to 99% by mass relative to m_{allyl} of a mixture of diethylene glycol bis(allyl carbonate) and oligomers of diethylene glycol bis(allyl carbonate) and 1% to 5% by mass relative to m_{allyl} of a monomer of formula (I).

In particular, in this case, the diethylene glycol bis(allyl carbonate) may represent 90% to 99% of the total mass of the mixture of diethylene glycol bis(allyl carbonate) and oligomers of diethylene glycol bis(allyl carbonate).

In the herein disclosed method, BPO and water may represent 95% to 100% of the mass of the radical initiator composition (RIC), in particular 99% to 100%. In this case, water may represent 5% to 40% of the mass of the radical initiator composition (RIC), in particular 20% to 30%.

In the herein disclosed method, the use of a RIC with sufficiently large values for the ratio m_{water1}/m_{BPO} of the mass of the water in the RIC over the dry mass of the BPO in the RIC, allows the safe handling of BPO, in particular safe handling without requiring the use of low temperature throughout the process. Indeed, it should be understood that no water is removed from the RIC before step c., for example before step d. Moreover, after step c., the BPO is in mixture with the allyl component, which also makes it less dangerous (less sensitive to shocks and friction).

While high amounts of water in the RIC provide safety in the handling of BPO, too high amounts are impractical as water must be removed from the composition later in the process.

In the herein disclosed method, the ratio m_{water1}/m_{BPO} of the mass of the water in the RIC over the dry mass of the BPO in the radical initiator composition may be of at least 0.28, in particular of 0.29 to 0.45, more particularly of 0.295 to 0.40, even more particularly of 0.30 to 0.39.

It should be understood that the RIC is directly mixed in step c. to give the polymerizable composition. As discussed above, no step of removal of water are performed between step b. and step c., for example no step of removal of water are performed between step b. and step d., thus allowing a safer and simpler handling of the various compositions (e.g., the RIC, the polymerizable composition, the dried polymerizable composition) when manufacturing a lens. In particular, the various compositions can be safely handled at room temperature and do not require the use of low temperature.

In the herein disclosed method, steps a. to e. may be performed at room temperature.

As defined herein, performing a step at room temperature means that no heating device or cooling device is used to bring the temperature of the compounds used in said step outside a range of 15 to 30°C.

In the herein disclosed method, the ratio m_{BPO}/m_{allyl} of the dry mass of the BPO over the dry mass of the at least one allyl monomer or allyl oligomer, may be of at least 0.01, in particular of 0.014 to 0.046, more particularly of 0.021 to 0.025, even more particularly of 0.022 to 0.024, and m_{allyl} may represent at least 95%, in particular 95% to 99%, more particularly 95% to 98%, even more particularly of 95% to 97% of the total mass of the polymerizable composition.

The ratio m_{BPO}/m_{allyl} and the proportion of allyl in the polymerizable compositions are chosen to ensure proper polymerization of the allyl component in step f. For example, a ratio that is too low (insufficient amount of initiator) may lead to a polymer insufficiently cross-linked and therefore to poor thermomechanical properties for the lens.

Additives other than BPO, water and the allyl component may be present before step c. either in the allyl composition or in the RIC.

During step c., additives other than BPO, water and the allyl component may be mixed with the allyl component and the RIC.

If additives are mixed with the allyl component and the RIC in step c., said additives may be mixed with the allyl component before mixing with the RIC.

The mass of the additives m_{additives} (comprising the additives other than BPO, water and the allyl component, which are present initially in the RIC or in the allyl composition or added in step c.) is comprised in the total mass of the polymerizable composition.

m_{additives} may represent less than 1%, in particular less than 0.5%, of the total mass of the polymerizable composition.

Additives may comprise light-absorbing additives such as a dye, a pigment, an UV absorber, or an IR absorber.

In the herein disclosed method, at least one light absorbing additive may be mixed with the at least one allyl monomer or allyl oligomer and the radical initiator composition during step c.

Said at least one light absorbing additives may comprise an UV absorber soluble in the polymerizable composition, alone or in mixture with one or more color balancing dyes.

Said UV absorber may have the following structure (II): 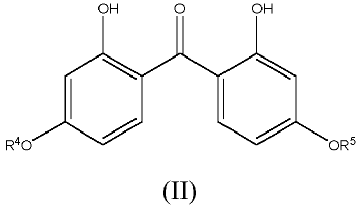 wherein R⁴ and R⁵ are each independently chosen from H or an alkyl chain having 1 to 12 carbon atoms, in particular wherein R⁴ and R⁵ are methyl groups.

In the herein disclosed method, the at least one light absorbing additive may represent less than 0.5%, in particular less than 0.2% of the total mass of the polymerizable composition.

Surprisingly, it has been observed that when water is stripped from the polymerizable composition the lenses obtained from the thus dried polymerizable composition have a reduced yellowness index.

In the herein disclosed method, in step d., water may be stripped from the polymerizable composition until the mass of water in the dried polymerizable composition m_{water2} is below 0.65%, such as 0.05% to 0.65%, in particular below 0.63%, such as 0.05% to 0.63%, more particularly below 0.60%, such as 0.05% to 0.60%, even more particularly below 0.59%, such as 0.05% to 0.59%, of the total mass of the dried polymerizable composition.

The means for stripping water from the polymerizable composition in step d. are not particularly limited. Any method known by the skilled person may be used.

It is clear that m_{water2} represents the total mass of water in the dried polymerizable composition. Before stripping, the polymerizable composition may comprise water coming from m_{water1} and from water present in the allyl composition or in the additives, if any.

It is clear that step d. is done after the mixing step c. and before the curing step f. In particular it may be performed before the step of filling the mold assembly e.

It is clear also that no addition of water to the polymerizable composition occurs between step d. and the curing step f.

Water contents, including m_{water2}, may be measured using a coulometric titration method known as the Karl Fischer coulometric method. This method is well-known of the skilled person. An automated Karl Fischer titrator may be used for the titration.

Curing of the dried polymerizable composition comprises the radical polymerization and cross-linking of the allyl component initiated by the radical initiator BPO. It comprises the decomposition of BPO into radical species able to initiate the reaction of the allyl component. It also comprises the propagation of the polymerization. The fragmentation of BPO may be obtained by heating the composition, for example by placing the filled mold assembly in an oven. Further heating may ensure adequate propagation and cross-linking.

In the herein disclosed method, curing the dried polymerizable composition may comprise 15 to 25 hours of heating the dried polymerizable composition between 60°C and 125°C, said heating comprising maintaining the dried polymerizable composition at temperatures of at least 110°C for 2 to 10 hours.

The herein disclosed method may further comprise post-curing treatments. Post curing treatments may include:
- Annealing the lens. The annealing helps relaxing internal stresses that may have built up in the lens in the previous steps of the method (in particular during the curing step). The annealing may comprise or consist of 45 min to 1h30 of heating at a temperature of 85 to 115°C.
- In the case of a corrective ophthalmic lens, surfacing of the lens, in particular surfacing of a back face of the lens, i.e. the side of the lens that is the closest to the eye of the wearer. The surfacing helps adjusting the geometry of the lens to give it the desired corrective power.
- Applying a varnish improving the cosmetics and/or the scratch resistance of the lens.
- Applying an anti-reflective coating.
- Polishing the lens.
- Edging the lens.

The present disclosure also relates to a polymerizable composition for manufacturing a lens (hereafter the presently disclosed composition), in particular an ophthalmic lens, comprising at least one allyl monomer or oligomer, BPO, and 0.05% to 0.65%, in particular 0.05% to 0.63%, more particularly 0.05% to 0.60%, even more particularly 0.05% to 0.59% of water, by mass relative to the total mass of the composition.

What has been said about the allyl component with respect to the herein disclosed method applies mutatis mutandis to the at least one allyl monomer or allyl oligomer in the presently disclosed composition.

A ratio m_{BPO}/m_{allyl} may be defined mutatis mutandis for the polymerizable composition of the presently disclosed composition as it has been for the presently disclosed method.

What has been said about m_{allyl} and about the ratio m_{BPO}/m_{allyl} with respect to the herein disclosed method applies mutatis mutandis to m_{allyl} and to the ratio m_{BPO}/m_{allyl} of the presently disclosed composition.

The presently disclosed composition may comprise additives. The mass of additives in the presently disclosed composition, m_{additives}, may represent less than 1%, in particular less than 0.5%, of the total mass of the presently disclosed composition.

What has been said about the additives with respect to the herein disclosed method applies mutatis mutandis to the additives of the presently disclosed composition.

When the presently disclosed composition comprises light absorbing additives, they may represent 0.02% to 0.5%, in particular 0.05% to 0.2% of the total mass of the presently disclosed composition.

The present disclosure also relates to the use of less than 0.65%, such as 0.05% to 0.65%, in particular less than 0.63%, such as 0.05% to 0.63%, more particularly less than 0.6%, such as 0.05% to 0.60%, even more particularly less than 0.59%, such as 0.05% to 0.59%, of water in a polymerizable composition comprising BPO and at least one allyl monomer or allyl oligomer for reducing the yellowness index of the cured polymerizable composition, wherein the percentage is a mass percentage relative to the total mass of the polymerizable composition. In particular, the presently disclosed use may be a use in the manufacturing of a lens, in particular an ophthalmic lens.

What has been said about the allyl component with respect to the herein disclosed method applies mutatis mutandis to the at least one allyl monomer or allyl oligomer of the presently disclosed use.

A ratio m_{BPO}/m_{allyl} may be defined for the polymerizable composition of the presently disclosed use as it has been for the presently disclosed method.

What has been said about m_{allyl} and about the ratio m_{BPO}/m_{allyl} with respect to the herein disclosed method applies mutatis mutandis to m_{allyl} and to the ratio m_{BPO}/m_{allyl} of the presently disclosed use.

The polymerizable composition of the presently disclosed use may comprise additives. The mass of additives in the presently disclosed use, m_{additives}, may represent less than 1%, in particular less than 0.5%, of the total mass of the polymerizable composition.

What has been said about the additives with respect to the herein disclosed method applies mutatis mutandis to the additives of the presently disclosed use.

In the presently disclosed use, when the polymerizable composition comprises light absorbing additives, they may represent 0.02% to 0.5%, in particular 0.05% to 0.2% of the total mass of the polymerizable composition.

What has been said about the curing with respect to the herein disclosed method applies mutatis mutandis to the curing of the presently disclosed use.

### Examples

### Titration of water

The water content in the samples is measured by the Karl Fischer coulometric titration method using an automated Karl Fischer titrator (Metrohm - 870 KF titrino plus).

### Measurement of the yellowness index (YI)

Measurements of the yellowness index of the lenses are made following the ASTM E313 standard on 2 mm thick plano lenses using a CARY60 spectrometer.

### Preparation of the lenses

2 mm thick plano lenses were produced according to the following procedure.

**Table 1 Composition of the polymerizable composition used in the preparation of the lenses**

| **Components** | **% by mass** | **Function** | **State** | **CAS** |
|---|---|---|---|---|
| Chiguard BP-6 | 0.11 | UV abs | Solid | *131-54-4* |
| CR39-E | 2.00 | Additive | Liquid | *Proprietary* |
| BPO 75% | 3.00 | Peroxide | Solid | *94-36-0* |
| CR-39 | 94.89 | Monomer | Liquid | *142-22-3* |

In table 1, Chiguard BP-6 is the following molecule:

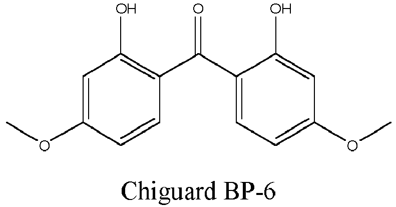

In table 1, CR39 designates the commercial product sold by PPG industries. It is a composition comprising more than 98% by mass of a mixture of diethylene glycol bis(allyl carbonate) and oligomers of diethylene glycol bis(allyl carbonate) relative to the total mass of the composition. In CR39, the diethylene glycol bis(allyl carbonate) represents more than 91% of the total mass of the mixture of diethylene glycol bis(allyl carbonate) and oligomers of diethylene glycol bis(allyl carbonate).

In table 1, "BPO 75%" designates a mixture of BPO and water in the form of granules comprising 75% by mass of BPO and 25% by mass of water, relative to the total mass of the mixture.

The procedure was the following:
1) CR39, CR39-E and Chiguard BP-6 were mixed 1h at room temperature until complete dissolution of the UV absorber.
2) BPO 75% was added at room temperature and the mixture was stirred until all BPO is dissolved.
3) Water was stripped from the mixture at room temperature and at low stirring speed using a rotary evaporator.
4) At this point the water content of the mixture was measured using the Karl Fischer coulometric titration method.
5) Mold assemblies gasketed with standard material were filled with the mixture.
6) The mixture was cured.

Four experiments were performed where the only parameter that varied was the time of evaporation of the water at step 3) in the procedure above with times of 0, 30, 60 and 90 min (comparative experiment BPO-1 and BPO-2 and experiments according to the present disclosure BPO-3 and BPO-4).

Comparative experiments using IPP instead of BPO were conducted, wherein the amount of water was controlled by adding increasing amounts of water to the mixtures (experiments IPP-1, IPP-2, IPP-3, IPP-4 and IPP-5).

### Results

The results are presented in table 2.

**Table 2**

| **Formulation** | **Evap. time** | **Water (ppm)** | **YI** | **Haze** |
|---|---|---|---|---|
| BPO-1 | - | 6653 | 3.300 | 0.24 |
| BPO-2 | 30min | 6210 | 3.090 | 0.26 |
| BPO-3 | 60min | 5950 | 3.060 | 0.31 |
| BPO-4 | 90min | 5871 | 2.935 | 0.27 |
| IPP-1 | - | 3357 | 3.4 | 0.17 |
| IPP-2 | - | 3855 | 3.3 | 0.16 |
| IPP-3 | - | 4414 | 3.3 | 0.16 |
| IPP-4 | - | 5611 | 3.4 | 0.32 |
| IPP-5 | - | 6384 | 3.4 | 0.24 |

As can be seen, the effect on the yellowness index of the water content is specific to BPO since no effect is observed with IPP.

## Claims

1. Method for manufacturing a lens comprising the following steps:
a. Providing a mass m_{allyl} of at least one allyl monomer or allyl oligomer,
b. Providing a radical initiator composition comprising benzoyl peroxide (BPO) in mixture with water,
c. Mixing said at least one allyl monomer or allyl oligomer with the radical initiator composition to obtain a polymerizable composition,
d. Stripping the water from the polymerizable composition to obtain a dried polymerizable composition,
e. Providing a mold assembly and filling the mold assembly with the dried polymerizable composition,
f. Curing the dried polymerizable composition in the mold assembly to obtain the lens.

2. The method according to claim 1, wherein the ratio m_{water1}/m_{BPO} of the mass of the water in the radical initiator composition over the dry mass of the BPO in the radical initiator composition is of at least 0.28.

3. The method according to claim 1 or 2, wherein the ratio m_{BPO}/m_{allyl} of the dry mass of the BPO over the dry mass of the at least one allyl monomer or allyl oligomer, is of at least 0.014 to 0.046, and wherein m_{allyl} represents at least 95% of the total mass of the polymerizable composition

4. The method according to any one of claims 1 to 3, wherein in step d., water is stripped from the polymerizable composition until the mass of water in the dried polymerizable composition m_{water2} is below 0.65% of the total mass of the dried polymerizable composition.

5. The method according to any one of claims 1 to 4, wherein the lens is an ophthalmic lens.

6. The method according to any one of claims 1 to 5, wherein the at least one allyl monomer or allyl oligomer is a compound or a mixture of compounds comprising at least two allyl groups each.

7. The method according to any one of claims 1 to 6, wherein the at least one allyl monomer or allyl oligomer comprises at least 90% by mass relative to m_{allyl} of a compound selected in the group consisting of diethylene glycol bis(allyl carbonate), oligomers of diethylene glycol bis(allyl carbonate), ethylene glycol bis(allyl carbonate), oligomers of ethylene glycol bis(allyl carbonate), bisphenol A bis(allyl carbonate), oligomers of bisphenol A bis(allyl carbonate), diallyl phthalate, diallyl isophthalate, diallyl terephthalate, and mixtures thereof.

8. The method according to claim 7, wherein the at least one allyl monomer or allyl oligomer comprises 1% to 10% by mass relative to m_{allyl} of a monomer represented by formula (I): 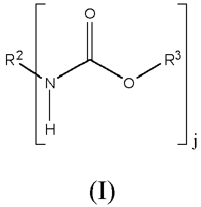 wherein R² is a polyvalent linking group that is free of urethane linkages; R³ is a residue of a material having a single hydroxy group and at least one allyl group, R being free of urethane linkages, and j is a number from 2 to 4.

9. The method according to claim 8, wherein the at least one allyl monomer or allyl oligomer comprises 95% to 99% by mass relative to m_{allyl} of a mixture of diethylene glycol bis(allyl carbonate) and oligomers of diethylene glycol bis(allyl carbonate) and comprises 1% to 5% by mass relative to m_{allyl} of a monomer of formula (I).

10. The method according to any one of claims 1 to 9, wherein steps a. to e. are performed at room temperature.

11. The method according to any one of claims 1 to 10, wherein at least one light absorbing additive is mixed with the at least one allyl monomer or allyl oligomer and the radical initiator composition during step c.

12. The method according to claim 11, wherein the least one light absorbing additive represents less than 0.5% of the total mass of the polymerizable composition.

13. The method according to any one of claims 1 to 12, wherein curing the dried polymerizable composition comprises 15 to 25 hours of heating the dried polymerizable composition between 60°C and 125°C, said heating comprising maintaining the dried polymerizable composition at temperatures of at least 110°C for 2 to 10 hours.

14. Polymerizable composition for manufacturing a lens comprising at least one allyl monomer or oligomer, BPO, and 0.05% to 0.65% of water, by mass relative to the total mass of the composition.

15. Use of less than 0.65% of water in a polymerizable composition comprising BPO and at least one allyl monomer or allyl oligomer for reducing the yellowness index of the cured polymerizable composition, wherein the percentage is a mass percentage relative to the total mass of the polymerizable composition.
